# EUROPEAN PATENT APPLICATION

(11) **EP 1 407 854 A2**
(43) Date of publication of application: **14.04.2004**
(21) Application number: 03103570.2
(22) Date of filing: 26.09.2003
(51) Int. Cl.: B23Q 17/20

(54) **Method for machining a surface and simultaneously measuring parameters of the surface being machined**

(30) Priority: 07.10.2002 SE 0202965
(71) Applicant: Aktiebolaget SKF, S-415 50 Gothenburg (SE)
(72) Inventor: GÖRANSSON, Bo, SE-412 88, GÖTEBORG (SE)
(74) Representative: Westman, Per Börje Ingemar

(57) **Abstract**

The invention refers to a method for establishing different parameters of a surface of a work piece (9) during machining of the surface using a machine with a spindle (1,6) supporting a tool (7), which spindle is supported in at least one bcaring (4) in a housing (5) in a rotary manner, and wherein displacement sensor means (13, 15) are arranged in the housing, for measuring displacement to which the spindle is subjected during machining operation, wherein
two first work pieces (9) are machined with different back off times to create two sets of signals with different level at back off times, whereby the sensor signals representing the deflections of the spindle are stored in an evaluation unit (16),
the first two work pieces, thus machined are measured and the result of this measurements is loaded in the evaluation unit,
the stored sensor signals representing the displacement to which the spindle was subjected during the machining of the first two work pieces are compared in the evaluation unit (16) with the result from the measurement of the same work pieces, and constants are calculated, which constant are transfer constants, representing the influence of the total deflection of the machine stiffness on the sensor signals,
whereby displacement sensor signals obtained at machining of subsequent work pieces (9) are fed into the evaluation unit and there are processed with the constants for giving a series of sensor signals representing the true total deflection of the loaded and running machine stiffness chain,
and subsequently using this true total deflection signals for calculation of different parameters of the subsequently machined work pieces.

## Description

### Background of the invention

The present invention refers to a method for facilitating simultaneous machining and measuring of parameters of a surface being subjected to machining, and particularly a bore in a work piece subjected to a grinding operation.

In the process of machining bores or other surfaces of different kinds in work pieces, it is evident for obtaining a good result that the bore shall be measured for continuous establishment of parameters such as bore diameter, taper and roundness. Earlier this has been effected, mainly with different types of gauges, which means that the measurement must be made between grinding operations. This will of course increase the total process time to an extent, which is unacceptable in mass-production.

For improving the process and measuring bore diameter and taper it has been used measurement fingers, which enter in the bore when the grinding wheel is removed, but even in this case the measurement is made between the grinding operations which means long grinding cycles. The measurement fingers are not useful for roundness measurement and their use means that the machine needs extra equipment, which is susceptible to damage when the measurement fingers are moved to and from measuring position. Furthermore this known kind of measuring means have a low resolution.

DE-A1-100 29 965 refers to a method and a device for exact, contact-free load measurement of a rotating spindle for the purpose of tool supervision. The device incorporates at least one displacement sensor which measures position changes of the rotatable spindle in relation to the housing, caused by axial forces, radial forces or torques acting on a tool supported by the spindle. The resulting measurement signal curve for one revolution of the spindle without load applied to the tool, thus is representative for irregularities and out-off-roundness of the measured surface of the rotating spindle, and it is stored in an evaluation unit, and this curve then is subtracted from the measurement signal curve for one revolution of the spindle with tool and spindle load in order to compensate for the part of the measurement signal curve caused by irregularities and out-off roundness of the spindle itself, thereby causing the evaluation unit of emitting an output representative only of spindle and tool load. By repeated tests and with aid of a rotational angle sensor, it then is possible to obtain from the evaluation unit a curve representing the pure tool load without influence from spindle irregularities or out-off roundness and without spindle load.

### Purpose and most relevant features of the invention

The purpose of the present invention is to propose a method making possible a simultaneous machining and measurement of parameters of a machined surface of a work piece, such as bore diameter, taper and roundness of a bore during internal machining, such as grinding thereof, and this has been obtained with a method as claimed in the accompanying claim 1.

### Brief description of the drawings

Hereinafter the invention will be further described with reference to a non-limiting embodiment of a machine spindle shown in the accompanying drawings, which can be used for performing the method according to the present invention.
Fig. 1 shows in a schematic cross sectional side view a grinding spindle during simultaneous grinding and measuring in accordance with the present invention.
Fig. 2 is a cross sectional end view along line A-A in Fig. 1.
Fig. 3 is an end view of a retainer carrying a number of sensors incorporated in the device, and
Fig. 4 is a section along line B-C in Fig. 3.

### Description of the preferred embodiment

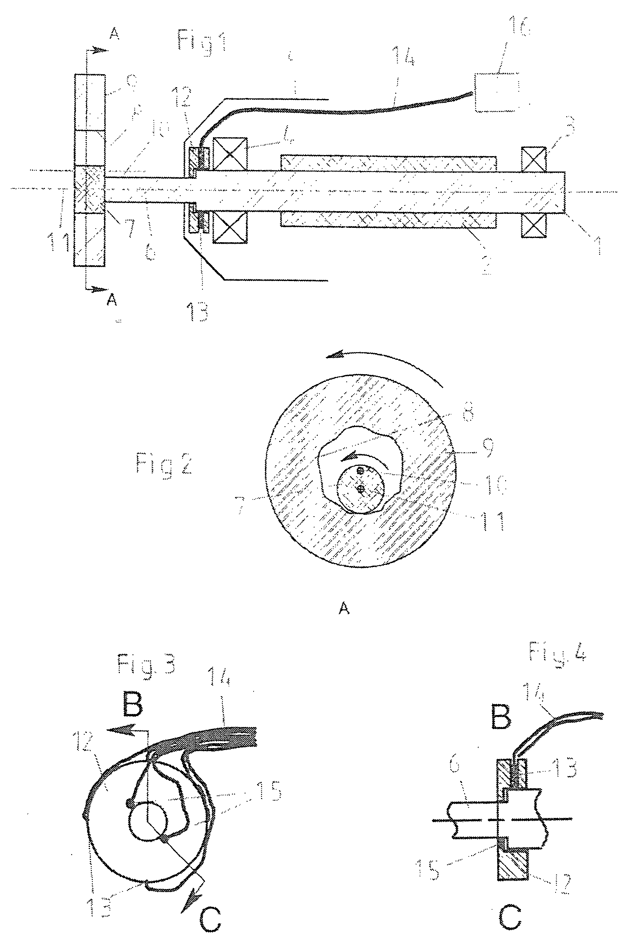

Fig. 1 shows schematically a machine spindle 1, which is rotatably driven by a drive means, such as an electrical motor 2, and rotatably supported in a first bearing 3 and a second bearing 4. Bearings 3, 4 and motor 2 are enclosed in a housing 5, through an opening in which the machine spindle projects with a free end 6, to which is secured a tool 7, in this case a grinding wheel, which in the case illustrated is in machining contact with a bore 8 in a annular work piece 9, which in turn is rotatably driven by a not shown driving motor via a not shown chucking arrangement. There is an offset O between the rotational axis 10 for the work piece 9 and the rotational axis 11 for the spindle 1,6. The work piece can also be rotated according to the microcentric principle.

At a position adjacent the bearing 4 situated nearest to the tool 7, and within the housing 5, there is provided a retainer 12 for at least one displacement sensor 13, which via a cable 14 is connected to a evaluation unit, intimated at 16.

Fig. 2 shows in a section along line A-A the work piece 9, with its bore 8, which in the drawing is shown with exaggerated irregularities and out-off-roundness. As can be seen the surface of the tool or grinding wheel 7, is in machining contact with the inner surface of the bore 8 in the work piece 9, whereas the axes 10 and 11 of work piece and tool are offset from each other.

In Fig. 3 is shown a schematic end view of the retainer 12 with four sensors 13 arranged to detect displacement of the spindle in radial directions, and also two sensors 15 arranged to detect displacement of the spindle in axial direction. The number and type of sensors is not critical but sensors of the same type are preferably evenly spaced apart from each other. It is furthermore preferred to couple all sensors differentially for compensating for temperature differences, and drift and electrical and magnetic disturbances.

The sensors should normally be of non-contacting type.
All sensors 13, 15 are connected via the cable 14 to an evaluation unit 16.

Fig. 4 shows in a cross section along line B-C in Fig. 3 the positioning of the different sensors for radial displacement measurement - sensors 13 - and for axial displacement - sensors 15 - in the retainer 12.

The basic idea of the present invention is to establish in real time simultaneously with the machining operation, such parameters of the object, which is being subjected to a machining operation, as diameter, roundness and taper, without the need of providing any measuring equipment neither at nor in the work piece, and this is obtained with the high resolution displacement sensors 13, 15 integrated in the spindle, whereby the deflection of the shaft can be measured during the grinding operation. By establishing the transfer functions of deflection, position and angle from the grinding wheel contact relative the work piece contact to the measured displacement signals it is possible to calculate the position and the deflection angle of the grinding wheel relative to the work piece. These transfer functions are depending on the bending of the shaft and quill and on the deformation of the bearing plus defomation in the machine, workhead, spindle, slides, etcetera. The parameters in the transfer functions can be calculated and/or calibrated for the system. The function is often pure linear for the small deformations occurring at the end of the grinding cycle. The relation between measured displacement signals and grinding force can also be estimated by calculations and/or testing. That information can be used for optimizing feeding speeds and to see how well the wheel instantly is cutting. By plotting the true deflection and the workhead spindle runout against the rotational angle of the work piece a diagram of the roundness of the bore can be produced in real time. The work speed can be measured either directly on the workhead spindle e.g. by means of a tachometer (not shown) or indirectly by means of a frequency analysis of the sensor signals. The diameter of the bore is calculated from the true deflection and the feeding position of the spindle. The taper is found from the deflection angle of the wheel. By measuring in two directions the cutting forces in relation to feeding forces can be obtained. With high resolution sensors the end of air feeding can be detected. Here the displacement sensors can replace other systems such as acoustic sensor system.

The method for establishing different parameters of a surface of the work piece 9 during machining of the surface using a machine with a spindle 1,6 supporting a tool 7, which spindle is supported in at least one bearing 4 in a housing 5 in a rotary manner, and wherein displacement sensor means 13, 15 are arranged in the housing, for measuring displacement to which the spindle is subjected during machining operation, is characterized in that two first work pieces 9 are machined with different back off times to create two sets of signals with different level at back off times, whereby the sensor signals representing the deflection of the spindle are stored in an evaluation unit 16, the two work pieces, thus machined are measured and the result of this measurements is loaded in the evaluation unit, the stored sensor signals representing the displacement to which the spindle was subjected during the machining of the two work pieces are compared in the evaluation unit 16 with the result from the measurement of the same work pieces, and constants are calculated, which constants are transfer constants, representing the influence of the total deflection of the machine stiffness chain (from machine contact, over spindle, machine and work piece back to machine contact) on the sensor signals, whereby displacement sensor signals obtained at machining of subsequent work pieces 9 are fed into the evaluation unit and there are processed with the constants for giving a series of sensor signals representing the true total deflection of the loaded and running machine stiffness chain, and subsequently using this true total deflection signals for calculation of different parameters of the subsequently machined work pieces.

The true total deflection constants can also be calculated from one work piece where the machining has stopped early and there is still a large unroundness. The combination of the recorded signal for the last revolutions before back off plotted against rotational angle of the work piece and the measured work piece gives the transfer functions.

Based on the true total deflection signals and the recorded feeding position it is possible to calculate from these two values the machined bore diameter, with the first machined work pieces as reference.

By measuring or calculating the rotation angle of the work piece, it is possible to produce a real time diagram of the roundness of the work piece simultaneously subjected to machining, by plotting the true total deflection against the rotation angle of work piece.

Instead of measuring displacement on the grinding spindle the sensors can be applied to the workhead spindle or to reference surfaces of the work piece and he same parameters can be calculated.

The rotational angle of the work piece 9 can be measured by means of a angular position detector, such as a tachometer on the workhead spindle or on the work piece, or it can be calculated by signal processing for establishing the period in which the sensor signal repeats itself.

For bores where the length of the bore and grinding wheel are similar, the taper of the bore is calculated directly from the transfer function for the deflection angle and the sensor signal.

By feeding the tool 7 axially and performing the measurement for establishing bore diameter in two positions axially spaced apart from each other it is possible to determine taper of the machined surface, also for longer bores.

The sensor retainer are all enclosed in the spindle housing 5 and in spite of the hard environment for the measurement, the sensors are all protected by the housing and the seals thereof.

By the described method it is possible to obtain in real time simultaneous with the machining operation clear illustrations (preferably in diagram form) of the instant parameters for the work piece, and therefore it is possible to consider during the very machining operation the tolerances and quality of the work piece thus machined. It is also possible to detect the cutting forces and thereupon optimize the dressing intervals for a grinding wheel.

The invention is not limited to the embodiments illustrated and described, but modifications and variants are possible within the scope of the accompanying claims.

## Claims

1. A method for establishing different parameters of a surface of a work piece (9) during machining of the surface using a machine with a spindle (1,6) supporting a tool (7), which spindle is supported in at least one bearing (4) in a housing (5) in a rotary manner, and wherein displacement sensor means (13, 15) are arranged, for measuring displacement to which the tool spindle or the workhead spindle is subjected during machining operation,
**characterized therein**,
that two first work pieces (9) are machined with different back off times to create two sets of signals with different level at back off times, whereby the sensor signals representing the deflections of the spindle are stored in an evaluation unit (16),
the first two work pieces, thus machined are measured and the result of this measurements is loaded in the evaluation unit,
the stored sensor signals representing the displacement to which the spindle was subjected during the machining of the first two work pieces are compared in the evaluation unit (16) with the result from the measurement of the same work pieces, and constants are calculated, which constant are transfer constants, representing the influence of the total deflection of the machine stiffness on the sensor signals,
recording the difference in feeding positions between the two first work pieces,
whereby displacement sensor signals obtained at machining of subsequent work pieces (9) are fed into the evaluation unit and there are processed with the constants for giving a series of sensor signals representing the true total deflection of the loaded and running machine stiffness chain,
and subsequently using this true total deflection signals for calculation of different parameters of the subsequently machined work pieces.

2. A method for establishing different parameters of a surface of a work piece (9) during machining of the surface using a machine with a spindle (1,6) supporting a tool (7), which spindle is supported in at least one bearing (4) in a housing (5) in a rotary manner, and wherein displacement sensor means (13, 15) are arranged in the housing, for measuring displacement to which the tool spindle or the workhead spindle is subjected during machining operation,
**characterized therein**,
that a first work piece (9) is machined and the machining is stopped early when there is still a large out-off roundness,
storeing in an evaluation unit (16) sensor signals representing the deflections of the spindle, obtained from the combination of the recorded signal for the last revolutions before back off plotted against the rotational angle of the work piece and the measured work piece, the stored sensor signal representing the displacement to which the spindle was subjected during the machining of the first work pieces is compared in the evaluation unit (16) with the result from the measurement of the same work pieces, and a constant is calculated, which constant are a transfer constant, representing the influence of the total deflection of the machine stiffness on the sensor signals,
recording the feeding position for the first work piece,
whereby displacement sensor signals obtained at machining of subsequent work pieces (9) are fed into the evaluation unit and there are processed with the constants for giving a series of sensor signals representing the true total deflection of the loaded and running machine stiffness chain,
and subsequently using this true total deflection signals for calculation of different parameters of the subsequently machined work pieces.

3. A method as claimed in claim 1 or 2,
**characterized in**,
using the recorded feeding positions and calculating machined bore diameter from these recorded feeding position and the true total deflection signals, with the first machined work piece or work pieces as reference.

4. A method as claimed in claim 3,
**characterized in**,
measuring or calculating the rotation angle of the work piece, and
producing a real time diagram of the roundness of the work piece simultaneously subjected to machining, by plotting the true total deflction against the rotation angle of the work piece.

5. A method as claimed in claim 4,
**characterized in**,
measuring the rotational angle of work piece (9) by means of a angular position detector, such as a tachometer.

6. A method as claimed in claim 4,
**characterized in**,
calculating the rotational angle of workhead spindle (10) by signal processing for establishing the period in which the sensor signal repeats itself.

7. A method as claimed in anyone of the claims 3 to 6,
**characterized in**,
feeding the tool (7) axially and performing the measurement for establishing bore diameter in two positions axially spaced apart from each other for determining taper of the machined surface.

8. A method as claimed in anyone of the claims 3 to 6, and where a bore is of the same length as the grinding wheel
**characterized in**,
calculating the taper of the bore directly from the transfer function for the deflection angle to the sensor signal.
